# EUROPEAN PATENT APPLICATION

(11) **EP 4 300 878 A1**
(43) Date of publication of application: **03.01.2024**
(21) Application number: 22181962.6
(22) Date of filing: 29.06.2022
(51) Int. Cl.: H04L 9/40, G06F 21/62, G05B 19/418

(54) **METHOD AND SYSTEM FOR CONTROLLING ACCESS TO DATA IN AN INDUSTRIAL PLANT OR IN A DATABASE ASSOCIATED TO THE INDUSTRIAL PLANT**

(71) Applicant: BASF SE, 67056 Ludwigshafen am Rhein (DE)
(72) Inventor: PACK, Robert, 67056 Ludwigshafen (DE)
(74) Representative: Eisenführ Speiser

(57) **Abstract**

A method for controlling access to data in at least one an industrial plant is provided. Elements of the industrial plant are mapped to elements of a graph structure based on a graph theory. Scopes (S10 - S30) associated to elements (11 - 18) of the graph structure are defined. At least one authorization provider (31 - 33) is associated to one of the scopes (S10 - S30). A request for data from a requesting entity for data from at least one a target entity is received. It is determining to which scope (S10 - S30) the data is related to. Authorization to the request for the data from the entity is provided by the at least one authorization provider (31 - 33) associated to the scope (S10 - S20) to which the request is related to. The requesting entity is granted access to the requested data based on the authorized request.

## Description

### FIELD OF THE INVENTION

The present invention relates to a method and system of controlling access to data in an industrial plant or in a database associated to the industrial plant.

### BACKGROUND OF THE INVENTION

Modern industrial plants are highly complex operations with a huge number of processing elements and a great number of sensors and actuators. Process data in such an industrial plant is monitored such that a large amount of process data is collected. This data is for example used for high level control, for a plant wide control and safety supervision systems, scheduling of maintenance and fault detection.

### SUMMARY OF THE INVENTION

It is an object of the invention to be able to access the data gathered in an industrial plant, wherein the data can be stored in the plant or in a database.

This object is achieved by a method of controlling access to data of an industrial plant in a database or in the industrial plant according to claim 1 and a system for controlling access to data of an industrial plant in a database or in the industrial plant according to claim 7.

According to an aspect of the invention, a method for controlling access to data in an industrial plant or in a data base associated to the industrial plant is provided. Elements of the industrial plant are mapped to elements of a graph structure based on a graph theory. Scopes associated to elements of the graph structure are defined. At least one authorization provider is associated to at least one of the scopes. A request for data from a requesting entity is received via an application programming interface. It is determined to which scope the requested data is related to. An authorization to the request from the requesting entity is provided by the at least one authorization provider associated to the scope to which the request is related to. The requesting entity is granted access to the requested data of or from a target entity based on the authorized request.

According to an embodiment of the invention, the at least one role defining access rights to the data in the industrial plant or the data base is associated to the target entity. The authorization of the requested data is performed based on the role associated to the entity.

According to an embodiment of the invention, the entity is a user, a service, a micro-service and/or a data processing pipeline.

According to a further embodiment of the invention, the data comprises data relating to a production asset in the industrial plant, processing data, telemetry data, meta data, laboratory data and/or production data.

According to an embodiment, the requesting entity is a user, a service, a micro-service and/or a data processing pipeline.

According to an embodiment, the target entity is a user, an internal or external service, an internal or external micro-service, a data processing pipeline.

According to an embodiment, the data of the target entity comprises data relating to a production asset in the industrial plant, processing data, telemetry data, meta data, laboratory data, and/or production data.

According to an aspect of the invention a system for controlling access to data in at least one industrial plant or in a database associated to the at least one industrial plant is provided. Elements of the industrial plant are mapped to elements of a graph structure based on a graph theory representing the industrial plant. Each scope is associated to one of the elements in the graph structure, wherein each scope comprises at least one signal provider configured to provide a signal. The system comprises an application programming interface configured to receive a request from a requesting entity for data from at least one target entity in the at least one industrial plant, and at least one authorization provider associated to one of the scopes and being configured to provide an authorization of data from the scope to which the target entity is associated to.

The data of the industrial plant can be generated by signal providers (e.g. sensor data, lab measurements) or by a production asset. Each target entity within the graph can be identified differently in different data storages in the industrial plant or the database as its data may be used for different purposes (e.g. control a motor, determine an energy consumption, predictive maintenance etc). Hence, each target entity in the graph structure may have references to various unique identifiers pointing to data stored in backend systems. These identifiers can be parsed when the graph structure is generated. Hence, the identifiers can be determined beforehand. In addition or alternatively, the identifiers can also change during the operation of the industrial plant.

According to an aspect of the invention, a computer program controlling access to data in an industrial plant or in a data base associated to the industrial plant is provided. The program comprising code means for causing the system to execute a method for controlling access to data in an industrial plant or in a data base associated to the industrial plant, when the program is run on a computer controlling the system.

According to an embodiment, an identifiable target entity in the graph structure may be a plant, a cost center, a business unit, a process group, a unit operation, a signals provider etc.

According to an embodiment, a scope can be related to a target entity. The scope can define the data or the data source that is related to the target entity. The data can relate to data stored in a database, life data from an industrial plant or derived data (e.g. a computation or model that produces results based on some concrete or derived inputs).

According to an embodiment, a scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

To enable an authorization of a requesting entity each signal in the graph structure is assigned to a scope within the graph.

According to an embodiment, data or information in or from the industrial plant can be structured into signals. Each signal can denote a column within a wide table, or a filter on a narrow table. In case of the wide table, individual signals may be further distinguished via fields denoting a specific scope in the table.

According to an embodiment, meta data in or from the industrial plant can be defined within the graph or can be retrieved from external sources via keys which can be defined within the graph.

The industrial plant can be implemented as a chemical plant.

It shall be understood that the aspects described above and specifically the method of claim 1, the system of claim 7, and the computer program of claim 8 have similar and/or identical preferred embodiments in particular as defined in the dependent claims.

It shall be understood that a preferred embodiment of the present invention can also be any combination of the dependent claims or above embodiments with a respective independent claim.

These and other aspects of the present invention will be apparent from and elucidated with reference to the embodiments described hereafter.

### BRIEF DESCRIPTION OF THE DRAWINGS

- Fig. 1: shows a schematic representation of a graph structure,
- Fig. 2: shows a schematic representation of a graph structure for a structure of a company,
- Fig. 3: shows a schematic representation of a processing in a plant, and
- Fig. 4: shows a further schematic representation of a graph structure of the plant of Fig. 3.

### DETAILED DESCRIPTION OF EMBODIMENTS

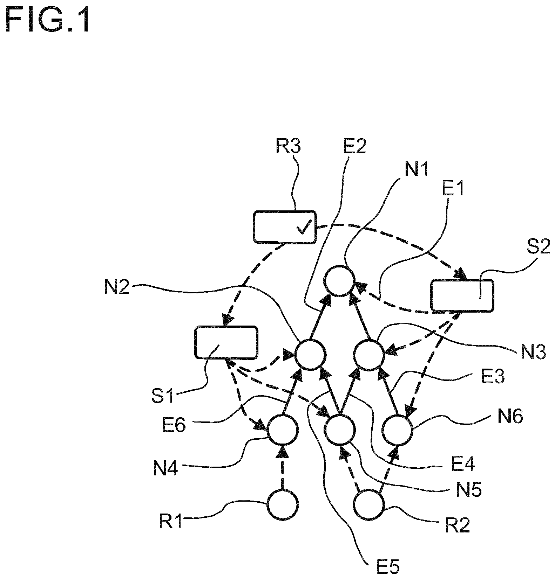

Fig. 1 shows a schematic representation of a graph structure. A graph structure is used as a way to describe elements of an industrial plant as well as their interdependencies.

In "A graph-theory-based approach to the analysis of large-scale plants", Preisig et al., Computers and Chemical Engineering, Pergamon Press Oxford, GB, Volume 33, No. 3, 20 March 2009, page 598 - 604, the application of the graph theory on the analysis of large-scale plants is described. The industrial plant is analysed and mapped to a graph structure. A graph relates to a set of vertices (nodes) and edges (links, lines), in which an edge connects two or more nodes.

Thus, a graph structure is used to map or represent a system architecture for example of an industrial plant like a chemical plant.

The graph structure of Fig. 1 comprises a number of nodes N1 - N6 as well as a number of edges E1 - E6. The nodes N1 - N6 may represent or may be mapped to different elements in an industrial plant.

Furthermore, the processing in the industrial plant can be mapped to different scopes. A scope S1, S2 may correspond to a signal or data processing. In other words, a scope can perform a processing based on the received data. A scope can own a signal (the signal is associated to the scope) which is provided by a signal provider. Such a signal provider can be one of the nodes N1 - N6. Accordingly, scopes S1 - S2 can be associated to one or more of the nodes N1 - N6. A signal or data provided by the nodes is processed by the scope.

As an example, scope S1 can be associated to the nodes N4, N5 and N6 representing elements in the industrial plant. The scope S2 can be associated to the nodes N1, N3 and N6 representing other elements in the industrial plant. The nodes may comprise signal providers (e.g. like sensors) which provide the signals that the scope requires to perform the desired processing.

In other words, the scope S1 requires information or data from the nodes N4, N5, N6. Hence, it does not require information or data from the nodes N1 - N3.

Moreover, the concept of role is also introduced in Fig. 1. In Fig. 1, three roles R1, R2, R3 may be present, wherein the roles R1 and R2 relate to an administrator. The role R3 may also relate to an administrator.

A role can be embodied by a user or service which requires access to data owned by the scope.

If a user or service requests data, first of all it must be determined to which scope the requested data is associated to and furthermore it must be determined whether the user or service has an appropriate role within the scope such that he or it has the right to access the data.

According to the embodiment of Fig. 1, a scope S1 - S2 owns a signal from one of the nodes N1 - N6. The scope defines an arbitrary subgraph associated to a specific node and a set of relationships.

The identification of a user can be performed by an external system or service and is not subject of this application. The present application focusses on the authorization of a user or user ID (which has already been identified e.g. by another system) to access data in a database in the industrial plant.

According to an embodiment of the invention, an industrial plant is described based on a graph structure. The access control to the elements of the graph structure can for example be performed based on a role based access control RBAC. By means of the RBAC, the system determines whether a user has access rights to the requested data. On the other hand, the graph structure is used to structure complex industrial plants and complex industrial processes in a more clearly and understandable way.

By using the role based access control RBAC, it is not required to associate different access rights to each user. Instead, the access rights are associated to different roles. Each user can then be associated to at least one role.

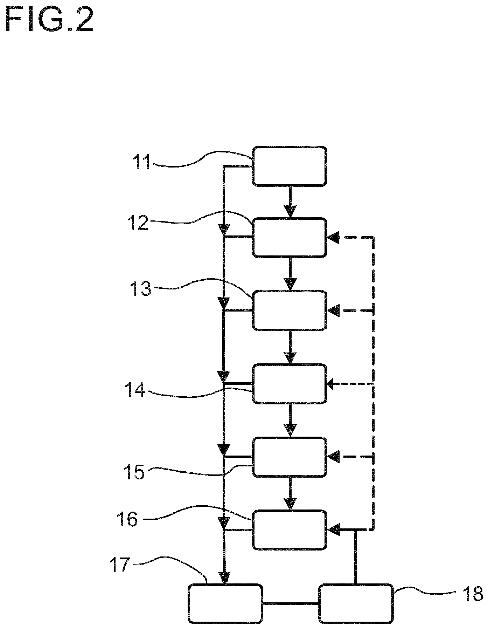

Fig. 2 shows a schematic representation of a graph structure for a structure of a company. A company 11 may have several industrial plants in a region 12. In the region 12, at least one industrial plant 13 is provided. In the industrial plant 13, at least one cluster 14 of plants is present. Each cluster 14 comprises at least one plant 15. Each plant 15 comprises at least one process group 16. A transport subsystem 17 and at least one unit operation 14 is provided. Each element in this graph is owned by the element above. For example, a site 13 can be owned by a region 12. Moreover, a process group 16 can be owned by a plant 15. A plant 15 can be owned by a cluster 14. A cluster can be owned by a site 13.

Different elements in the graph structure can be represented as scopes.

In Fig. 2, different levels of a production system are depicted. Different roles may need access to different levels within this system. For example, for maintenance, the access required may relate to individual components in the ground within a unit operation 18. On the other hand, cost accounting may only require to allocate cost to the level of a cluster of several plants. Hence, this will not need access to the individual components within the plant.

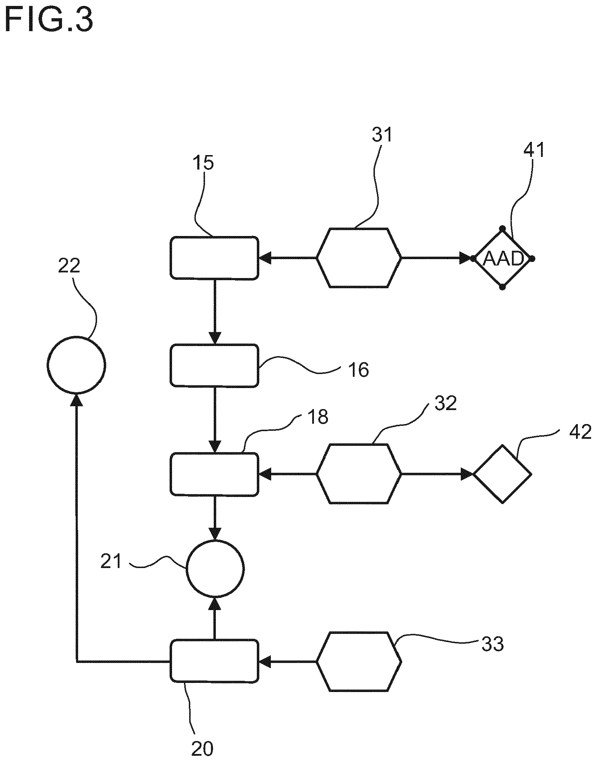

Fig. 3 shows a schematic representation of a processing in a plant. A plant 15 comprises at least one process group 16. The process group 16 comprises at least one unit operation 18. A signal provider 20 provides a signal 21 which is owned by the unit operation 18. The signal provider 20 provides a signal 22 which can also be owned by the process group 16.

According to an embodiment of the invention, authorizing providers 31 - 33 can be implemented or integrated into the graph structure. In other words, an authorization provider can be associated to different elements within the graph structure.

As an example in Fig. 3, different authorization providers 31 - 33 can be associated for example to the unit operation 18 and the plant 15, respectively. An authorization severity 33 can be associated to the signal provider 20. A first database 42 may be associated to the first authorization provider 31 (associated to the unit operation). A further database 42 may be associated to the first authorization 31 provider associated to the plant 15.

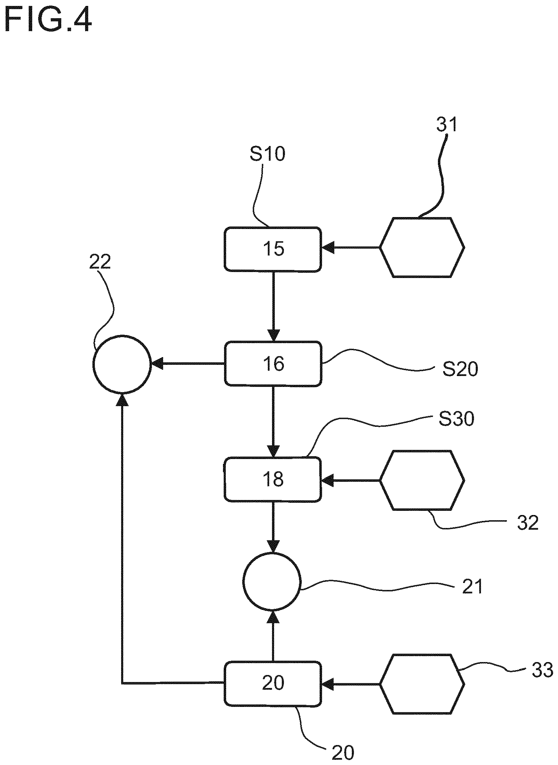

Fig. 4 shows a further schematic representation of a graph structure of the plant of Fig. 3. Here, a first scope 510 is associated to the plant 15, a second scope S20 is associated to the process group 16 and a third scope S30 is associated to the unit operation 18. The signal provider 20 provides a signal 21, which is owned by the third scope S30. The signal provider 20 can provide a second signal 22, which is owned by the second scope S20. A first authorization provider 31 can be associated to the first scope S10. A second authorization provider 32 can be associated to the third scope S30. An authorization severity can be associated to the signal provider. It should be noted, that Fig. 4 is a very schematic representation of a plant. As a plant comprises a number of unit operations and a great number of signal providers like sensors, the plant will also have a huge amount of different scopes.

A signal provider like sensors in the industrial plant provide signals, which can be owned by a scope (like unit operations or the process group).

If an entity (like a user or a service) requests access to a signal from a signal provider, the authorization provider which is in the next higher level decides whether or not a user can receive access to the requested data. This can for example be performed based on a role based access control RBAC, where each user is associated to a role.

The entity requesting access to the data can be a user via an API or via a user interface Ul. Alternatively, the entity can also be a service, an automated job, a data processing pipeline, a service or an automated job acting on behalf of a logged in user.

According to an embodiment of the invention, the data to which the entity may request access can be data, meta data, calculations, modules derived from the data, and/or applications visualizing or processing the data.

The data sources can be data sources internal of the system, external data sources directly accessible via the processing platform, external data sources not directly accessible from the platform and meta data of such systems.

According to an embodiment of the invention, the data and meta data from the equipment in an industrial or chemical plant can be structured in the graph structure. The corresponding permissions to the access of this data can be mapped to scopes and roles within the graph structure. A scope can own data and/or a signal. A role can be embodied by a user who wants access to the triple data. A role can for example be an analyst, a scientist, an operator, etc. To grant access to the requested data, the system must determine which is the scope that owns the data and determine whether the user has an appropriate role within this scope. To determine whether or not the user can have access to the data, first it must be determined which scope is associated to the requested data.

Within the graph structure according to the invention, a scope defines an arbitrary subgraph by choosing a specific note and a set of relationships.

A signal provider can for example by a sensor which generates a signal. A signal may describe some sort of measurement or information generated or (e.g. for accounting) an entity within the graph. The signal provider provides in an abstract form the system or process that materialize the signal like a database, a deployed module/calculation, etc. Each signal which represents a distinguished piece of information within the data source must be uniquely distinguishable within the data source. This can be structured as a wide table where individual signals usually refer to a column or as a narrow table where the signal is encoded within a column in the table. A signal provider holds information about how this can be done by referencing a field or column within the produced data set where the reference to an entity is made. Accordingly, an observation within a data source can be allocated to an identifiable entity within the graph.

Furthermore, to resolve the authorization problem, each signal is assigned to a scope within the graph structure. The measured data can be structured into signals where each signal may denote a column within a wide table or a filter on a narrow table. If a wide table is used, individual signals can be further distinguished via fields denoting a specific scope in the table.

Several entities can be found within the different trees inside the graph or are referenced in external systems. The external systems may for example be SAP systems or the like. The respective nodes in the graph that are considered identifiable entities are all entities that hold a reference to an external system via a foreign key.

In the graph structure, a signal is owned by an entity within the graph. Every signal provider defines a minimum role requirement. If a query is to be resolved, it needs to be checked which signals are involved in the query. From the signals, each scope owning the signals can be determined. Such a scope can be transversed when resolving the query for data.

The authorization is performed by assigning a role of a user or service for a scope in the graph. Such a role can be a viewer, developer and/or business analyst. Based on the ownership of the signal in the scope and the role requirements of a signal provider, a minimum requirement for a user to resolve the query can be determined.

The scopes within the graph structure can be hierarchical and access rights of an entity for a scope can for example b passed down to a child of a scope (i.e. scopes within a scope).

According to an embodiment of the invention, a request for data issued by an entity may relate to data or subsets of data which are associated to different scopes in the graph structure. As an example, one entity requesting this data may for example by a monitoring unit monitoring critical assets like compressors and pumps. Some of the compressors or pumps may be located within different plants, different process groups or different unit operations. Therefore, the corresponding data will be owned by different scopes within the system. Access right to such data can for example be associated to groupings or activities. Such groupings may provide a grouping outside the hierarchy as for example described in Fig. 2 or 3. Regarding the authorization of the entity to access the data, the respective scopes may be determined and post access request to all owners of the data (all scopes owning the data may be issued). In addition or alternatively, the owners of the data may be asked to allow access to the logical unity (topic, project, etc.) and as such accept all individuals assigned to these activities inherit all required access right to perform the activity. Such activities can be a form of a fine-grained authorization provider.

The data of the industrial plant is generated by signal providers (e.g. sensor data, lab measurements) or for a production asset. Each entity (target entity) within the graph can be identified differently in different data storages as data may be used for different purposes (e.g. control a motor, determine an energy consumption, predictive maintenance etc). Hence, each target entity in the graph structure may have references to various unique identifiers pointing to data stored in backend systems. These identifiers can be parsed when the graph structure is generated. Hence, the identifiers can be determined beforehand. In addition or alternatively, the identifiers can also change during the operation of the industrial plant.

An identifiable target entity in the graph structure may be a plant, a cost center, a business unit, a process group, a unit operation, a signals provider etc

A scope can be related to a target entity. The scope can define the data or the data source that is related to the target entity. The data can relate to data stored in a database, life data from an industrial plant or derived data (e.g. a computation or model that produces results based on some concrete or derived inputs. A scope can be associated to at least one signal provider, which is providing at least one signal. A signal can relate to measurements or information generated by an entity in the graph structure. This can be measurements e.g. by sensors, within a production process or accounting information. The signal provider can also be a system or process generating a signal. This can be a database or a deployed model or calculation. Each signal must have a unique identifier such that it can be identified and thus be extracted within a data source. A signal can thus be a distinguishable piece of information or data within a data source.

To enable an authorization of a requesting entity each signal in the graph structure is assigned to a scope within the graph.

Data or information in or from the industrial plant can be structured into signals. Each signal can denote a column within a wide table, or a filter on a narrow table. In case of the wide table, individual signals may be further distinguished via fields denoting a specific scope in the table.

Meta data in or from the industrial plant can be defined within the graph or can be retrieved from external sources via keys which can be defined within the graph.

A requesting entity may require access to subsets of data within separate scopes within the graph. An example might be a unit responsible for monitoring critical assets like compressors or pumps that are located within different plants (scopes). To grant access in these kinds of scenarios, additional groupings or activities. (e.g. projects for short lived, topics for long lived activities) can be provided. The entities can be reference related entities within the graph and provide a grouping outside the other hierarchies. From there we have two options to authorize users or requesting entities. The scopes which are required are identified and access requests are send to all owners of the data. Alternatively, the owners of the data are requested to allow access to the logical entity (topic, project, etc) and thus all entities assigned to these activities inherit all required access rights to perform said activity. Activities can be a form of fine-grained authorization provider, and not a dedicated scope in the graph.

According to an example, the industrial plant can be implemented as a chemical plant. The chemical plant can refer to any manufacturing facility based on chemical processes, e.g. transforming a feedstock to a product using chemical processes. In contrast to discrete manufacturing, chemical manufacturing is based on continuous or batch processes. As such monitoring and/or controlling of chemical plants is time dependent and hence based on large time series data sets. A chemical plant may include more than 1.000 sensors producing measurement data points every couple of seconds. Such dimensions result in multiple terabytes of data to be handled in a system for controlling and/or monitoring chemical plants. A small-scale chemical plant may include a couple of thousand sensors producing data points every 1 to 10s. For comparison a large-scale chemical plant may include a couple of ten-thousand sensors, e.g. 10.000 to 30.000, producing data points every 1 to 10s. Contextualizing such data results in the handling of multiple hundred gigabytes to multiple terabytes.

Chemical plants may produce a product via one or more chemical processes transforming the feedstock via one or more intermediate products to the product. Preferably a chemical plant provides an encapsulated facility producing a product, that may be used as feedstock for the next steps in the value chain. Chemical plants may be large-scale plants like oil and gas facilities, gas cleaning plants, carbon dioxide capture facilities, liquefied natural gas (LNG) plants, oil refineries, petro-chemical facilities or chemical facilities. Upstream chemical plants in petrochemicals process production for example include a steamcracker starting with naphtha being processed to ethylene and propylene. These upstream products may then be provided to further chemical plants to derive downstream products such as polyethylene or polypropylene, which may again serve as feedstock for chemical plants deriving further downstream products. Chemical plants may be used to manufacture discrete products. In one example one chemical plant may be used to manufacture precursors for polyurethane foam. Such precursors may be provided to a second chemical plant for the manufacture of discrete products, such as an isolation plate comprising polyurethane foam.

The value chain production via various intermediate products to an end product can be decentralized in various locations or integrated in a Verbund site or a chemical park. Such Verbund sites or chemical parks comprise a network of interconnected chemical plants, where products manufactured in one plant can serve as a feedstock for another plant.

Chemical plants may include multiple assets, such as heat exchangers, reactors, pumps, pipes, distillation or absorption columns to name a few of them. In chemical plants some assets may be critical. Critical assets are those, which when disrupted critically impact plant operation. This can lead to manufacturing processes being compromised. Reduced product quality or even manufacturing stops may the result. In the worst-case scenario fire, explosion or toxic gas release may be the result of such disruption. Hence such critical assets may require more rigorous monitoring and/or controlling then other assets depending on the chemical processes and the chemicals involved. To monitor and/or control chemical processes and assets multiple actors and sensors may be embedded in the chemical plant. Such actors or sensors may provide process or asset specific data relating to e.g. the state of an individual asset, the state of an individual actor, the composition of a chemical, or the state of a chemical process. In particular, process or asset specific data may include one or more of the following data categories: process operation data, such as composition of a feedstock or an intermediate product, process monitoring data, such as flow, material temperature, asset operation data, such as current, voltage, and asset monitoring data, such as asset temperature, asset pressure, vibrations.

Assets may include any component of the chemical plant, such as equipment, instrumentation, machine, process or process component.

Process or asset specific data refers to data relating to a specific asset or process and contextualized with respect to such specific asset or process. Process or asset specific data may be contextualized only with respect to individual assets and processes. Process or asset specific data may include measurement value, data quality measure, time, measurement unit, asset identifier for specific assets or process identifier for a specific process sections or stages. Such process or asset specific data may be collected on the lowest processing layer and contextualized with respect to specific assets or processes in a single plant. Such contextualization may relate to context available on the lowest processing layer. Such context may relate to a single plant.

Plant specific data refers to process or asset specific data that is contextualized with respect to one or more plant(s). Such plant specific data may be collected on a further higher processing layer and contextualized with respect to multiple plants. Specifically, contextualization may relate to context available on the higher processing layer. Via contextualization context such as plant identifier, plant type, reliability indicator, or alarm limits for the plant may be added to process or asset specific data points. In a further step technical asset structure of one or more plant(s), a Verbund site or a chemical park, other asset management structure (e.g. asset network), or application context (e.g. model identifier, third party exchange) may be added. Such overarching context can originate from functional locations or digital twins, such as digital piping and instrumentation diagrams, 3D models or scans with xyz coordinates of the plant assets. Additionally or alternatively local scans from mobile devices linked to e.g. piping and instrumentation diagrams may be used for contextualization.

In particular, plant specific data relating to interfaces between chemical plants in a manufacturing chain may be provided on the higher processing layer or the external processing layer. Thus, monitoring and/or controlling, e.g. via anomaly detection, setpoint steering and optimization in chains across multiple plants, can be enhanced. For monitoring and/or controlling the chain across multiple plants process applications with online in/out data profiles may be used. Such data and process applications may be transferred between plants. Combined with mass and energy balances that can be monitored, such process applications may optimize the full chain across chemical plants rather than individual plants in the chain

The input data may include real time data from sensors, such as wireless monitoring devices or loT devices, non-real time data, or output data of deployed containers or executed applications. Such data may relate to machinery, such as machinery type or sensor data measured with respect to the machinery, chemicals, such as chemicals type or sensor data measured with respect to chemical components processed in the chemical plant, processes, such as chemical process type or sensor data measured with respect to the chemical processes performed in the chemical plant, and/or plant, such as plant type or sensor data measured with respect to the chemical plant, e.g. environmental measurement data.

A single unit device or system may fulfil the functions of several items recited in the claims. The mere fact that certain measures are recited in mutually different dependent claims does not indicate that a combination of these measures cannot be used to advantage. Procedures like the analysis of data and the adding of metadata to the data etc. performed by one or several units or devices can be performed by any other number of units, devices or systems. These procedures can be implemented as a program code means of a computer program and/or as dedicated hardware. A computer program product may be stored/distributed on a suitable medium such as an optical storage medium or a solid state medium supplied together with or as part of other hardware but may also be distributed in other form such as via the internet or other wired or wireless telecommunication systems.

Any reference signs in the claims should not be constructed as limiting the scope.

## Claims

1. Method for controlling access to data in at least one an industrial plant or in a data base associated to the at least one industrial plant,
wherein elements (11-18) of the industrial plant are mapped to elements (N1 - N6) of a graph structure based on a graph theory, comprising the steps of:
defining scopes (S10 - S30) associated to elements (11 - 18) of the graph structure, wherein at least one authorization provider (31 - 33) is associated to one of the scopes (S10 - S30),
receiving a request for data from a requesting entity for data from at least one a target entity via an application programming interface (API),
determining to which scope (S10 - S30) the requested data is related to,
providing authorization to the request from the requesting entity for the data from the target entity by the at least one authorization provider (31 - 33) associated to the scope (S10 - S20) to which the request is related to, and
granting the requesting entity access to the requested data based on the authorized request.

2. Method according to claim 1, wherein
at least one role defining access rights to the data in the industrial plant or the data base is associated to the entity,
wherein the authorization for the requested data is performed based on the role associated to the entity.

3. Method according to claim 1 or 2, wherein
the requesting entity is a user, a service, a micro-service and/or a data processing pipeline.

4. Method according to any one of the claims 1 to 3, wherein
the target entity is a user, an internal or external service, an internal or external micro-service and/or a data processing pipeline.

5. Method according to any one of the claims 1 to 4, wherein
the data comprises data relating to a production asset in the industrial plant, processing data, telemetry data, meta data, laboratory data, production data.

6. Method according to any one of the claims 1 to 5, wherein
the industrial plant is a chemical plat.

7. System for controlling access to data in at least one industrial plant or in a database associated to the at least one industrial plant, wherein elements (11 - 18) of the industrial plant are mapped to elements (N1 - N6) of a graph structure based on a graph theory representing the industrial plant, wherein each scope being associated to one of the elements in the graph structure, wherein each scope comprises at least one signal provider configured to provide a signal, comprising:
an application programming interface (API) configured to receive a request from a requesting entity for data from at least one target entity in the at least one industrial plant, and
at least one authorization provider (31 - 33) associated to one of the scopes (S10 - S30) and being configured to provide an authorization of data from the scope (S10 - S30) to which the target entity is associated to.

8. Computer program controlling access to data in an industrial plant or in a data base associated to the industrial plant, the program comprising code means for causing the system according to claim 7 to execute a method according to any one of the claims 1 to 6, when the program is run on a computer controlling the system.
